# EUROPEAN PATENT APPLICATION

(11) **EP 3 211 426 A1**
(43) Date of publication of application: **30.08.2017**
(21) Application number: 16157464.5
(22) Date of filing: 25.02.2016
(51) Int. Cl.: G01N 35/04, B01L 9/06

(54) **SAMPLE CONTAINER CARRIER**

(71) Applicant: Roche Diagnostics GmbH, 68305 Mannheim (DE); F. Hoffmann-La Roche AG, 4070 Basel (CH)
(72) Inventor: KÄPPELI, Marcel, 5634 Merenschwand (CH); HERMANN, Pius, 6280 Urswil (CH)
(74) Representative: Patentanwälte Ruff, Wilhelm, Beier, Dauster & Partner mbB

(57) **Abstract**

The invention relates to a sample container carrier for transporting sample containers, for example test tubes and/or vials, in a laboratory automation system, the sample container carrier comprising a basic body (2) having a hollow (20) with a central axis (A), wherein the hollow (20) is adapted for accommodating a lower end of a sample container (5), at least three resiliently deformable and/or displaceable first retaining elements (30) mounted to the basic body (2), wherein the first retaining elements (3) are distributed about the central axis (A) and adapted to clamp a sample container (5) inserted in the hollow (20) of the basic body (2), and at least three resiliently deformable and/or displaceable second retaining elements (32) mounted to the basic body (2), wherein the second retaining elements (32) are distributed about the central axis (A) and adapted to clamp the sample container (5) inserted in the hollow (20) of the basic body (2) underneath the at least three first retaining elements (30), and wherein the second retaining elements (32) are arranged at least partly inside the hollow (20) of the basic body (2). The invention further relates to a laboratory sample distribution system having a number of sample containers, and a laboratory automation system comprising a laboratory sample distribution system.

## Description

### TECHNICAL FIELD AND PRIOR ART

The invention relates to a sample container carrier for transporting sample containers, for example test tubes and/or vials, in a laboratory automation system. The invention further relates to a laboratory sample distribution system having a number of sample container carriers, and a laboratory automation system comprising a laboratory sample distribution system.

A laboratory automation system comprises a number of pre-analytical, analytical and/or post-analytical stations, in which samples, for example blood, saliva, swab and other specimens taken from the human body, are processed. It is generally known to provide various containers, such as test tubes or vials, containing the samples. The test tubes are also referred to as sample tubes. In the context of the application, containers such as test tubes or vials for containing a sample are referred to as sample containers.

Several sample containers can be placed in so-called racks for a handling. In an alternative distribution system, sample containers are place in an upright or vertical position in so called sample container carriers or pucks having a retaining area for retaining sample containers. Sample container carriers are disclosed among others in US 6,274,092 B1, US 6,971,506 B2, US 7,485,264 B2, US 8,147,778 B2 and EP 0 916 406 A2.

Generally, in laboratory automation systems different kinds of sample containers are handled, in particular test tubes and/or vials of different diameters. It is further known to control the transport of the sample containers and/or a treatment of the sample contained in the sample container by means of a bar code provided on an outside surface of the sample container. For this purpose, the bar code should be readable during the transport and/or at all handling stations without the necessity to remove the sample container from the carrier.

### SUMMARY OF THE INVENTION

It is an object of the present invention to provide a sample container carrier allowing for a secure support of different types of sample containers without hindering a readability of the bar code or any other type of identification code provided on an outside of the tube. It is a further object of the present invention to provide a laboratory sample distribution system and a laboratory automation system comprising a distribution system having a number of sample container carriers.

These objects are solved by a sample container carrier, a laboratory sample distribution system having a number of sample containers, and a laboratory automation system comprising a laboratory sample distribution system with the features of claims 1, 14, and 15. Preferred embodiments are defined in the dependent claims.

According to a first aspect, a sample container carrier for transporting sample containers in a laboratory automation system is provided, the sample container carrier comprising a basic body having a hollow with a central axis, wherein the hollow is adapted for accommodating a lower end of a sample container, at least three resiliently deformable and/or displaceable first retaining elements mounted to the basic body, wherein the first retaining elements are distributed about the central axis and adapted to clamp a sample container inserted in the hollow of the basic body in an area above said hollow, and at least three resiliently deformable and/or displaceable second retaining elements mounted to the basic body, wherein the second retaining elements are distributed about the central axis and adapted to clamp the sample container inserted in the hollow of the basic body underneath the at least three first retaining elements, and wherein the second retaining elements are arranged at least partly inside the hollow of the basic body.

Sample containers of different sizes, in particular of different diameters, can be securely held or at least supported at a bottom region by means of the second retaining elements arranged at least partly inside the hollow. Hence, a sample container is prevented from tipping even in case the sample container is not fully inserted and does not reach a maximum depth inside the hollow. By means of the first and the second retaining elements the sample containers are clamped at two distinct clamping areas at different heights. By arranging the second retaining elements at least partly inside the hollow, a distance between the clamping areas is maximized without increasing the overall size of the sample container carriers.

In one embodiment, the first retaining elements and the second retaining elements are arranged in an alternating sequence about the central axis. As the second retaining elements are arranged inside the hollow, the second retaining elements will not hinder the visibility and/or readability of a bar code provided on the sample container. The number of first and second retaining elements differs in one embodiment, wherein for example two second retaining elements are arranged between two first retaining elements. In preferred embodiments, the number of first and second retaining elements is the same and the elements are equally spaced about the central axis.

In alternative or in addition, the first retaining elements and the second retaining elements are arranged such that in each case one first retaining element and one second retaining element are aligned in a direction parallel to the central axis.

The first and the second retaining elements are resiliently deformable and/or displaceable. In one embodiment, the basic body is provided with a number of upwardly projecting support fingers for supporting the first retaining elements in a direction radially outwards about the central axis. By means of the support fingers, a stiffness of the clamping device formed by the first retaining elements is increased and a maximum deformation and/or displacement radially outwards is limited.

In one embodiment, the first retaining elements and/or the second retaining elements each are made of a sheet metal material. A suitable sheet metal material can be chosen by the person skilled in the art. In one embodiment the first retaining elements and/or the second retaining elements each comprise a hooked portion having a vertex directed toward the central axis. The hooked portion allows for a reliable clamping. Further, the legs of the hooked portion also function as guidance upon insertion of the sample containers.

In one embodiment, a retaining structure formed integrally from a sheet metal material is provided, which retaining structure includes the first retaining elements and the second retaining elements. In other words, the number of elements and, thus, the assembly effort is reduced.

For mounting the retaining structure to the basic body, in one embodiment the basic body comprises at least two parts, namely an outer sleeve and an inner sleeve received in the outer sleeve, wherein the retaining structure is mounted between the outer sleeve and the inner sleeve. If, in this case, further upwardly projecting support fingers for supporting the first retaining elements are provided, said support fingers preferably are formed integrally with the outer sleeve.

In one embodiment, at least one of the outer sleeve and the inner sleeve is provided with a protruding edge forming a stop for the retaining structure. The protruding edge protrudes in particular embodiments perpendicular to the central axis from an upper rim of the outer sleeve radially to the inside or from an upper rim of the inner sleeve radially to the outside.

In one embodiment, the outer sleeve or the inner sleeve are formed integrally with a sliding disc. In a particular embodiment, the basic body further comprises a sliding disc, wherein the outer sleeve and the inner sleeve are mounted to the sliding disc. The sliding disc accommodates for example a magnetically active element, wherein the at least one magnetically active element is adapted to interact with a magnetic field such that a driving force is applied to the sample container carrier. In particular at least one permanent magnet is provided as magnetically active device.

In an alternative embodiment, a number of retaining strips formed from a sheet metal material is provided each retaining strips comprising one of the first retaining element and one of the second retaining elements. The retaining strips in particular embodiments are identical in design. For a simple assembly, the retaining strips are clipped and/or glued to the basic body.

In one embodiment, the basic body is provided with a number of upwardly projecting support fingers, wherein the retaining strips are attached, in particular clipped, to the support fingers. The fixation area at which the retaining strips are attached to the support fingers is chosen suitably by the person skilled in the art, wherein the chosen fixation area influences the maximum deformation and/or displacement of the first and the second retaining elements. In one embodiment, the fixation area is chosen at least essentially mid-way between the first and the second retaining element of each retaining strip.

In order to allow for a simple assembly, the basic body in one embodiment comprises a sleeve surrounding the hollow and a sliding disc, wherein the sleeve is mounted to the sliding disc. In particular, the sleeve is mounted to the sliding disc using a separable connection, such as a snap-fit connection or a screw connection, or a non-separable connection for example by gluing or welding.

According to a second aspect, a laboratory sample distribution system having a number of sample container carriers is provided. The distribution system for example comprises a transport plane with a number of magnetic actuators for generating a magnetic field such that a driving force is applied to each of the sample container carriers for transporting the sample container carriers. Such a system is described for example in WO 2013/064656 A1 incorporated herein by reference. The distribution system in alternative or in addition in one embodiment comprises additional conveyor devices for moving a sample container carrier along a defined path.

According to a third aspect, a laboratory automation system with a number of pre-analytical, analytical and/or post-analytical stations, and with a distribution system having a number of sample container carriers is provided.

### BRIEF DESCRIPTION OF THE DRAWINGS

In the following, an embodiment of the invention will be described in detail with reference to the drawings. Throughout the drawings, the same elements will be denoted by the same reference numerals.
- Fig. 1:: a side view of a first embodiment of a sample container carrier for transporting sample containers,
- Fig. 2:: the sample container carrier of Fig. 1 retaining a sample container,
- Fig. 3:: a top view of the sample container carrier of Fig. 1,
- Fig. 4:: a sectional view along line IV-IV of the sample container carrier of Fig. 3,
- Fig. 5:: a retaining structure of the sample container carrier of Fig. 1,
- Fig. 6:: a side view of a second embodiment of a sample container carrier for transporting sample containers,
- Fig. 7:: a top view of the sample container carrier of Fig. 6, and
- Fig. 8:: a sectional view along line VIII- VIII of the sample container carrier of Fig. 7.

### DETAILED DESCRIPTION OF EMBODIMENTS OF THE INVENTION

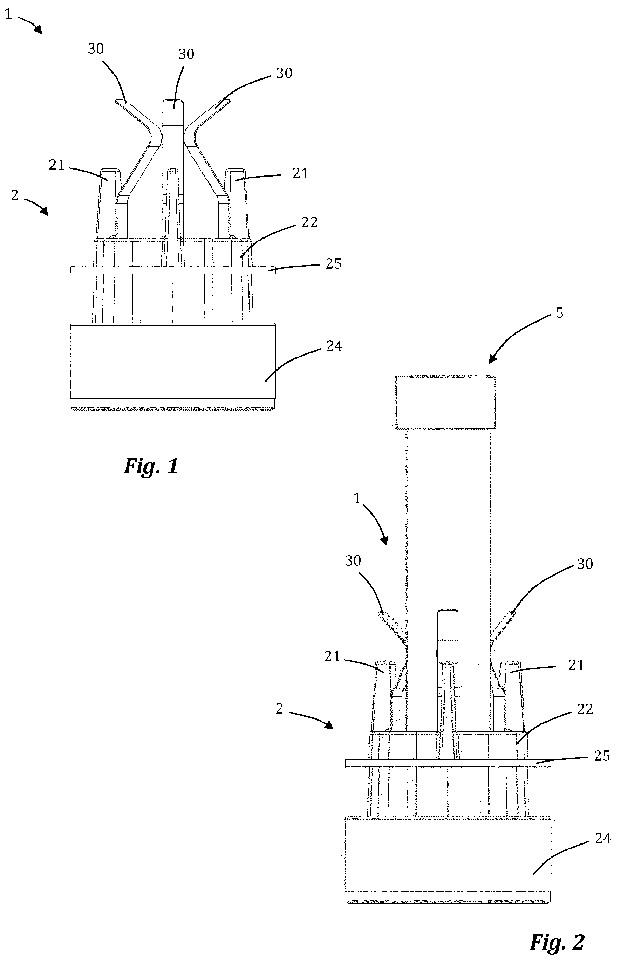

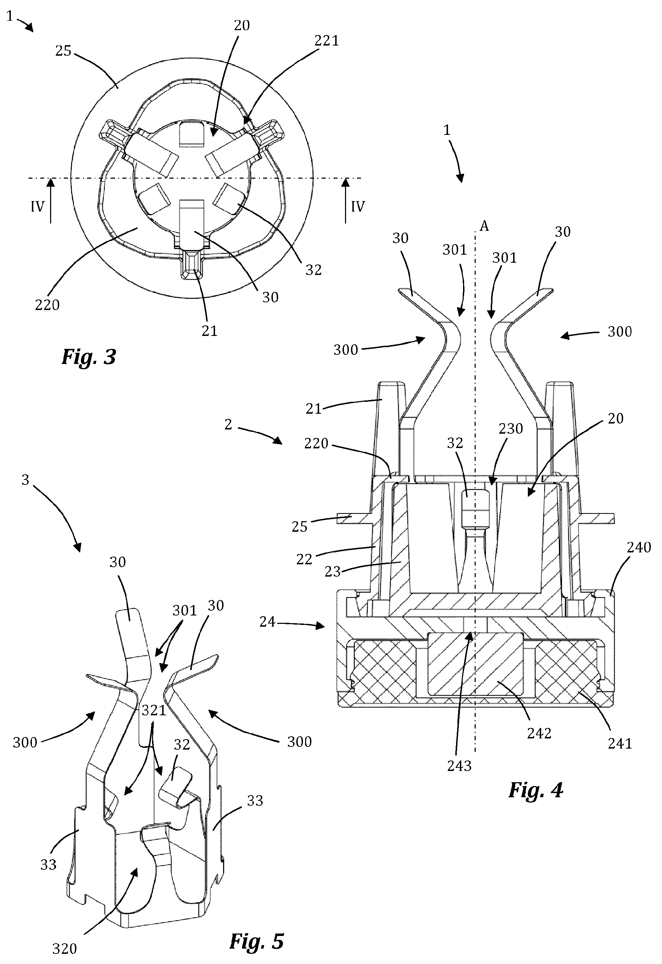

Figs. 1 to 4 show a first embodiment of a sample container carrier 1 for transporting sample containers 5 (see Fig. 2). Fig. 5 shows a retaining structure 3 of the sample container carrier 1.

The sample container carrier 1 shown in Figs. 1 to 4 comprises a basic body 2 having a hollow 20 with a central axis A, three resiliently deformable and displaceable first retaining elements 30 mounted to the basic body 2, and three resiliently deformable and displaceable second retaining elements 32 also mounted to the basic body 2.

The basic body 2 further comprises a sliding disc 24. The sliding disc 24 comprises two coupled elements 240, 241 accommodating in-between a magnetically active element 242, which is adapted to interact with a magnetic field such that a driving force is applied to the sample container carrier 1. Due to production-related issues, in the embodiment shown, the upper element 51 of the sliding disc 5 is provided with a hole 53. In other embodiments, no such hole is provided.

As best seen in Fig. 2, the hollow 20 is adapted for accommodating a lower end of a sample container 5, wherein the sample container 5 is clamped by means of the first and the second retaining elements 30, 32 at two different heights.

As best seen in Fig. 4, the second retaining elements 32 are arranged inside the hollow 20 of the basic body 2 for clamping the for transporting sample containers 5 at the lower end close to its bottom.

In the embodiment shown, an equal number of first and second retaining elements 30, 32 is provided, namely three first retaining elements 30 and three second retaining elements 32, which are distributed about the central axis A in an alternating sequence. The basic body 2 is provided with a number of upwardly projecting support fingers 21 for supporting the first retaining elements 30 in a radial outward direction about the central axis A. The retaining elements 30 are not fixed to the support fingers 21 and moveable towards the center axis A relative to the support fingers 21.

The first retaining elements 3 and the second retaining elements 32 each are made of a sheet metal material.

More particular, in the embodiment shown in Figs. 1 to 5, a retaining structure 3 formed integrally from a sheet metal material is provided, which retaining structure 3 includes the first retaining elements 30 and the second retaining elements 32. The retaining structure 3 is shown in detail in Fig. 5. For forming the retaining structure 3, a sheet metal material is bent to a hexagon, wherein the first retaining elements 30 and the second retaining elements 32 are provided at side surfaces of the hexagon. As best seen in Figs. 4 and 5, the first retaining elements 30 and the second retaining elements 32 each comprise a hooked portion 300, 320 having a vertex 301, 321 directed toward the central axis A. The retaining structure 3 further comprises flat mounting surfaces 33.

The basic body 2 of the embodiment shown in Figs. 1 to 5 comprises an outer sleeve 22 and an inner sleeve 23 received in the outer sleeve 22, wherein the retaining structure 3 is mounted between the outer sleeve 22 and the inner sleeve 23. For a positioning of the retaining structure 3 along the direction of the central axis A, the outer sleeve 22 is provided with a protruding edge 220 forming a stop for the retaining structure 3. At the opposite end, the outer sleeve 22 and the inner sleeve 23 are mounted to the sliding disc 24 such that retaining structure 3 is fixed in position along the direction of the central axis A between the protruding edge 220 of the outer sleeve 22 and the sliding disc 24. The protruding edge 220 is provided with cutouts 221 (see Fig. 3) for the first retaining elements 30 allowing the first retaining elements 30 to extend upwardly past the protruding edge 220.

The hollow 20 having a circular cross-section is formed by the inner sleeve 23, wherein cutouts 230 (see Fig. 4) are provided for the second retaining elements 32 allowing the second retaining elements 30 to protrude radially inside the inner sleeve 23. A bottom of the hollow 20 is flat. The inner shell surface of the inner sleeve 23 is slightly tapered for guiding the sample container 5 upon the insertion towards the bottom and to allow for an easy demolding process when manufacturing the inner sleeve by injection molding.

The outer sleeve 22 is provided with a rim 25, wherein the sliding disc 24 together with the rim 25 forms a guide groove allowing a movement of the sample container carrier 1 with or without sample container 5 along a rail (not shown) or a similar element. Further, in the embodiment shown in Figs. 1 to 5, an outer shell surface of the outer sleeve 22 is non-circular to allow for an easier gripping of the sample container carrier 1.

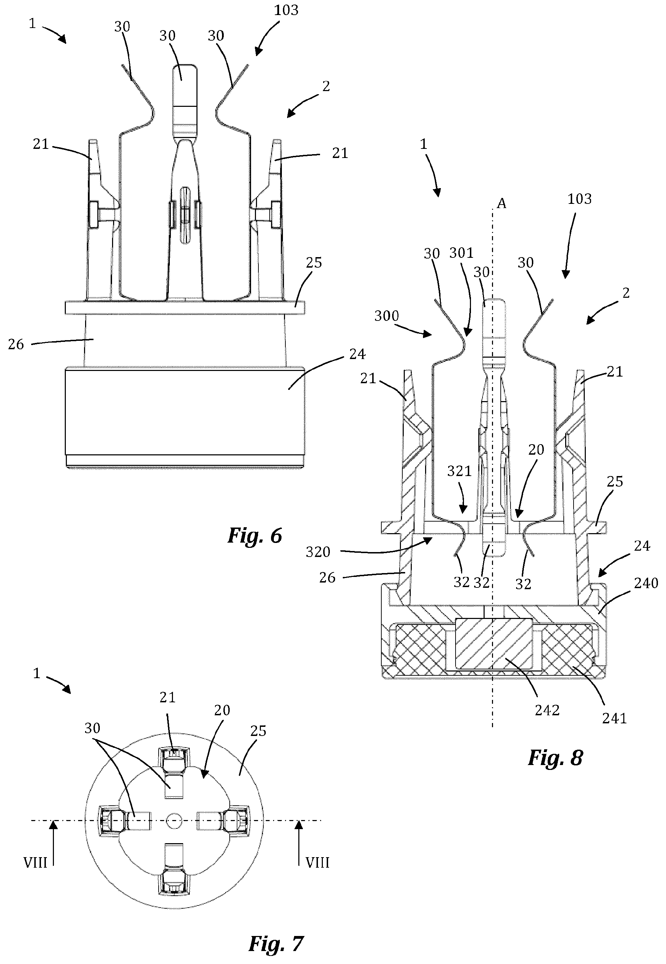

Figs. 6 to 8 show a second embodiment of a sample container carrier 1 comprising a basic body 2, four resiliently deformable and displaceable first retaining elements 30 mounted to the basic body 2, and four resiliently deformable and displaceable second retaining elements 32 also mounted to the basic body 2.

In the embodiment shown in Figs. 6 to 8, the first retaining elements 30 and the second retaining elements 32 are arranged such that in each case one first retaining element 30 and one second retaining element 32 are aligned in a direction parallel to the central axis A. More particular, a number of retaining strips 103 each formed from a sheet metal material is provided, each retaining strip 103 comprising one of the first retaining elements 30 and one of the second retaining elements 32.

The basic body 2 comprises a sleeve 26 surrounding the hollow 20, four upwardly projecting support fingers 21, and a sliding disc 24. The support fingers 21 are formed integrally with the sleeve 26, wherein the support fingers 21 extend upwardly from an upper end of the sleeve 26. The conjoint element comprising the sleeve 26 and the support fingers 21 is mounted to the sliding disc 24, in particular clipped to the sliding disc 24.

The retaining strips 103 are attached to the support fingers 21 approximately at a region midway between hooked portions 300, 320 of the first and the second retaining elements 30, 32, wherein the second retaining elements 32, in particular the hook portions 320 of the second retaining elements 32 are arranged inside the sleeve 26. The vertices 301, 321 of the hooked portions 300, 320 are directed toward the central axis A. It is obvious to the person skilled in the art that a restoration force of the retaining elements 30, 32 can be influenced by properly choosing a length of the retaining strips 103 and/or the attachment area for attaching the retaining strips 103 to the support fingers 21. In alternative embodiments, the retaining strips 103 are attached to the support fingers 21 at more than one area.

In the embodiment shown, the hooked portions 300 of the first retaining elements 30 have a longer leg at the distal end for a reliable guidance of the sample container 5 (see Fig. 2) upon insertion into the sample container carrier 1.

In the embodiment shown in Figs. 6 to 8, the hollow 20 of the basic body 2 is provided with an upward tapering portion, in other words, the diameter of the hollow 20 increased towards a bottom of the hollow 20. This allows for a tilting of the sample containers 5 upon an insertion. However, due to the resilient restoring forces of the second retaining elements 32, the sample carrier (5 see Fig. 2) is brought back into an upright position.

The sliding disc 24 of Figs. 6 to 8 corresponds to that of Figs. 1 to 4 and also comprises two coupled elements 240, 241 accommodating a magnetically active element 242, which is adapted to interact with a magnetic field such that a driving force is applied to the sample container carrier 1. At an upper end of the sleeve 26, a rim 25 is provided for forming a guiding groove together with the sliding disc 24.

It will be apparent that the embodiments shown are only exemplary and that various modifications can be made in construction and arrangement within the scope of the invention as defined in the appended claims.

## Claims

1. Sample container carrier for transporting sample containers (5) in a laboratory automation system comprising:
- a basic body (2) having a hollow (20) with a central axis (A), wherein the hollow (20) is adapted for accommodating a lower end of a sample container (5),
- at least three resiliently deformable and/or displaceable first retaining elements (30) mounted to the basic body (2), wherein the first retaining elements (3) are distributed about the central axis (A) and adapted to clamp a sample container (5) inserted in the hollow (20) of the basic body (2) in an area above said hollow (20), and
- at least three resiliently deformable and/or displaceable second retaining elements (32) mounted to the basic body (2), wherein the second retaining elements (32) are distributed about the central axis (A) and adapted to clamp the sample container (5) inserted in the hollow (20) of the basic body (2) underneath the at least three first retaining elements (30),
**characterized in that** the second retaining elements (32) are arranged at least partly inside the hollow (20) of the basic body (2).

2. Sample container carrier according to claim 1, **characterized in** the first retaining elements (30) and the second retaining elements (32) are arranged in an alternating sequence about the central axis (A).

3. Sample container carrier according to claim 1, **characterized in** the first retaining elements (30) and the second retaining elements (32) are arranged such that in each case one first retaining element (30) and one second retaining element (32) are aligned in a direction parallel to the central axis (A).

4. Sample container carrier according to any one of claims 1, 2 or 3, **characterized in that** the basic body (2) is provided with a number of upwardly projecting support fingers (21) for supporting the first retaining elements (30) in a direction radially outwards about the central axis (A).

5. Sample container carrier according to any one of claims 1 to 4, **characterized in that** the first retaining elements (3) and/or the second retaining elements (32) each are made of a sheet metal material.

6. Sample container carrier according to claim 5, **characterized in** the first retaining elements (30) and/or the second retaining elements (32) each comprise a hooked portion (300, 320) having a vertex (301, 321) directed toward the central axis (A).

7. Sample container carrier according to claim 6, **characterized in that** a retaining structure (3) formed integrally from a sheet metal material is provided, which retaining structure (3) includes the first retaining elements (30) and the second retaining elements (32).

8. Sample container carrier according to claim 7, **characterized in that** the basic body (2) comprises at least two parts, namely an outer sleeve (22) and an inner sleeve (23) received in the outer sleeve (22), wherein the retaining structure (3) is mounted between the outer sleeve (22) and the inner sleeve (23).

9. Sample container carrier according to claim 8, **characterized in that** the outer sleeve (22) and/or the inner sleeve is provided with a protruding edge (220) forming a stop for the retaining structure.

10. Sample container carrier according to claim 8 or 9, **characterized in that** the basic body (2) further comprises a sliding disc (24), wherein the outer sleeve (22) and the inner sleeve (23) are mounted to the sliding disc (24).

11. Sample container carrier according to claim 6, **characterized in that** a number of retaining strips (103) formed from a sheet metal material is provided each retaining strip (103) comprising one of the first retaining elements (30) and one of the second retaining elements (32).

12. Sample container carrier according to claim 11, **characterized in that** the basic body (2) is provided with a number of upwardly projecting support fingers (21), wherein the retaining strips (103) are attached to the support fingers (21).

13. Sample container carrier according to claim 11 or 12, **characterized in that** the basic body comprises a sleeve (26) surrounding the hollow (20) and a sliding disc (24), wherein the sleeve (26) is mounted to the sliding disc (24).

14. Laboratory sample distribution system having a number of sample container carriers (1) according to any one of claims 1 to 13.

15. Laboratory automation system with a number of pre-analytical, analytical and/or post-analytical stations, and with a distribution system according to claim 14.
